# EUROPEAN PATENT APPLICATION

(11) **EP 2 634 504 A1**
(43) Date of publication of application: **04.09.2013**
(21) Application number: 11836250.8
(22) Date of filing: 25.10.2011
(51) Int. Cl.: F24J 2/04, F03G 6/00, F24J 2/24, F24J 2/46, F24J 2/48

(54) **THERMAL RECEIVER AND SOLAR THERMAL POWER GENERATION DEVICE**

(30) Priority: 25.10.2010 JP 2010239009
(71) Applicant: Ibiden Co., Ltd., Gifu 503-8604 (JP)
(72) Inventor: MAJIMA Kazutaka, Ibi-gun Gifu 501-0695 (JP); KATO Masataka, Ibi-gun Gifu 501-0695 (JP)
(74) Representative: HOFFMANN EITLE
(86) International application number: PCT/JP2011/074522
(87) International publication number: WO 2012/057117

(57) **Abstract**

Provided is a thermal receiver that can efficiently absorb radiated solar light through heliostats and convert the solar light into heat. The thermal receiver is a thermal receiver used in a solar thermal power generation device, including a heat absorption body made of one or multiple honeycomb units having multiple flow paths arranged for circulation of a heat medium, and a support body which supports the heat absorption body and allows the circulation of the heat medium, in which the heat absorption body is configured to include silicon carbide, and a surface to which solar light is radiated has undergone any surface treatment of a polishing treatment or a coating treatment.

## Description

### Technical Field

The present invention relates to a thermal receiver and a solar thermal power generation device.

### Background Art

As a power generation method using the sun, solar thermal power generation is known. In the solar thermal power generation, light radiated from the sun is collected using a reflecting mirror or the like, and a vapor turbine is driven using the obtained solar heat, thereby generating power. In the solar thermal power generation, since greenhouse effect gases, such as carbon dioxide, are not generated during power generation so that heat can be stored, power generation is possible even under cloudy weather conditions or at night. Therefore, in the past, the solar thermal power generation was attracting attention as a promising method of power generation.

A method of the solar thermal power generation can be roughly classified into two types, a trough type and a tower type. The tower-type solar thermal power generation refers to a power generation method in which solar light is concentrated and collected at a thermal receiver present in a tower installed at the center portion using a number of plane mirrors called heliostats, and a heat medium is heated using the heat, thereby generating power. A heliostat is a several square meter plane mirror, and, in the tower-type solar thermal power generation, several hundred to several thousand of the heliostats are disposed around the tower, whereby solar light can be concentrated at one place. Therefore, it is possible to heat the thermal receiver to approximately 1000°C, and the tower-type solar thermal power generation has a characteristic of a favorable thermal efficiency.

As the thermal receiver for the tower-type solar thermal power generation, PTL 1 discloses a receiver in which a heat absorption body, which has a number of flow paths for the circulation of a heat medium, and is made of silicon carbide, or silicon and silicon carbide, is accommodated and supported by a funnel-shaped support body.
In the thermal receiver, a heat medium made of air or a gas mixture including air is circulated through the flow paths in the heated heat absorption body, which allows the heat medium to obtain heat. In the tower-type solar thermal power generation, water is boiled and vaporized using the obtained heat, and a vapor turbine is driven, thereby generating power.

### Citation List

### Patent Literature

[PTL 1] U.S. Patent No. 6003508

### Summary of Invention

### Technical Problem

The thermal receiver needs to absorb solar light radiated through heliostats and efficiently convert the solar light into heat. However, since the surface to which the solar light is radiated is a planar surface, no one can be sure that the thermal receiver described in PTL 1 has a sufficiently low reflectivity of solar light, and there is a problem in that the absorption efficiency is not high. Therefore, there is a demand for a thermal receiver having a more favorable absorption efficiency.

The invention has been made to solve the above problem, and an object of the invention is to provide a thermal receiver and a solar thermal power generation device in which solar light radiated through heliostats can be efficiently absorbed and converted into heat. Solution to Problem

That is, according to the thermal receiver according to a first aspect, there is provided a thermal receiver used in a solar thermal power generation device, including a heat absorption body made of one or multiple honeycomb units having multiple flow paths arranged for circulation of a heat medium, and a support body which accommodates and supports the heat absorption body and allows the circulation of the heat medium, in which the heat absorption body is configured to include silicon carbide, and a surface to which solar light is radiated has undergone any surface treatment of a polishing treatment or a coating treatment.

In the thermal receiver according to the first aspect, since a surface to which solar light is radiated has undergone a polishing treatment or a coating treatment, it is possible to suppress reflection of collected solar light, whereby it is possible to more efficiently heat the thermal receiver by reducing heat loss caused by reflection of light.
In addition, since the heat absorption body is configured to include silicon carbide, a thermal conductivity is high, cracking and the like do not occur easily, and it is possible to smoothly transfer the obtained heat to the heat medium.

In the thermal receiver according to a second aspect, the polishing treatment is a blasting process treatment, and a coarsened surface is formed on the surface to which solar light is radiated. When the blasting process treatment is carried out, even in a heat absorption body made of hard porous silicon carbide, a coarsened surface can be formed on the surface to which solar light is radiated relatively easily, whereby reflection of solar light is suppressed so that it is possible to increase a heat absorption efficiency of the thermal receiver. The blasting process treatment is desirably, for example, a sand blasting process treatment in which silicon carbide particles and the like are used.

In the thermal receiver according to a third aspect, a surface roughness Ra of the coarsened surface is desirably 0.5 µm to 5.0 µm.
Since solar light becomes easy to be reflected on the inside of the coarsened surface, becomes easy to be absorbed, and becomes difficult to exit outside due to the coarsened surface formed through the polishing treatment, the reflection of solar light becomes difficult to occur, and the reflection of solar light can be reliably reduced on the surface to which solar light is radiated. Meanwhile, the surface roughness Ra is measured based on the method described in JIS B 0601.

In the thermal receiver according to a fourth aspect, a black coating layer is formed on the surface to which solar light is radiated through the coating treatment.
Even with the above configuration, similarly to the polishing treatment, it is possible to further suppress the reflection of solar light, and to efficiently absorb light at the thermal receiver.

In the thermal receiver according to a fifth aspect, the coating layer is preferably made of an infrared black body coating composition including an infrared radiator mainly including an oxide of a transition element (hereinafter also referred to as a crystalline inorganic material) and an inorganic compound having a softening temperature of 400°C to 1000°C (hereinafter also referred to as an amorphous inorganic material).
Since the coating layer having the above composition is excellent in terms of adhesion with the heat absorption body, even when the heat absorption body is into a high temperature state, the coating layer becomes difficult to be detached.

In the thermal receiver according to a sixth aspect, the oxide of a transition element is at least one selected from manganese dioxide, manganese oxide, iron oxide, cobalt oxide, copper oxide and chromium oxide, and the inorganic compound is preferably a high expansion glass with a low melting point, which is made of at least one selected from aluminosilicate glass, potassium lead glass, soda lead glass, soda zinc glass, soda barium glass, barium glass, boron glass, strontium glass, high lead glass and potassium soda lead glass.
When the coating layer has the above composition, it is possible to produce the coating layer which is black and is excellent in terms of adhesion with the heat absorption body.

In the thermal receiver according to a seventh aspect, the coating layer may be a porous carbon layer.
The porous carbon layer has a low reflectivity, can suppress the reflection of solar light, and can improve the absorption efficiency of heat.

In the thermal receiver according to an eighth aspect, a thickness of the coating layer is preferably 2 µm to 50 µm.
When the coating layer has the above film thickness, it is possible to relatively easily form the coating layer having a uniform thickness by coating a coating fluid (coating material) on the surface of the heat absorption body, to which solar light is radiated.

In the thermal receiver according to a ninth aspect, a coarsened surface is desirably formed on a surface of the coating layer through the polishing treatment.
Even with the above configuration, solar light becomes easy to be reflected on the inside of the coarsened surface, becomes easy to be absorbed, and becomes difficult to exit outside due to the coarsened surface formed through the polishing treatment, it is possible to reduce the reflection of solar light.

In the thermal receiver according to a tenth aspect, the polishing treatment is a blasting process treatment.
When the blasting process treatment is applied, it is possible to easily form the coarsened surface on the surface of the coating layer.

In the thermal receiver according to an eleventh aspect, the surface roughness Ra of the coarsened surface is preferably 0.5 µm to 5.0 µm.
When the thermal receiver has the above configuration, since solar light becomes easy to be reflected on the inside of the coarsened surface to which sunlight is radiated, and becomes difficult to exit outside, it is possible to more reliably reduce the reflection of solar light. Meanwhile, the surface roughness Ra is measured based on the method described in JIS B 0601.

In the thermal receiver according to a twelfth aspect, flow paths are formed in the honeycomb unit at 31.0 paths/cm² to 93.0 paths/cm², and a thickness of a wall portion between the flow paths is preferably 0.1 mm to 0.5 mm.
When the thermal receiver has the above configuration, the heat medium circulates through the flow paths so that heat is efficiently transferred to the heat medium from the honeycomb unit, and, consequently, it is possible to generate power at a high efficiency.

In the thermal receiver according to a thirteenth aspect, the honeycomb unit is preferably made of dense silicon carbide.
When the thermal receiver has the above configuration, since the heat storing property of the honeycomb unit increases, and the thermal conductivity is extremely high, it is possible to smoothly transfer the obtained heat to the heat medium.

In the thermal receiver according to a fourteenth aspect, the honeycomb unit is preferably made of porous silicon carbide.
When the thermal receiver has the above configuration, since the honeycomb unit has a high thermal conductivity, it is possible to smoothly transfer the obtained heat to the heat medium.

In the thermal receiver according to a fifteenth aspect, the honeycomb unit is preferably made of porous silicon carbide having pores loaded with silicon.
When the thermal receiver has the above configuration, since the honeycomb unit is a dense body, the heat storing property of the honeycomb unit increases, and the thermal conductivity is also extremely high, and therefore it is possible to smoothly transfer the obtained heat to the heat medium.

In the thermal receiver according to a sixteenth aspect, it is preferable that a porosity of the honeycomb unit be 35% to 60%, and an average pore diameter be 5 µm to 30 µm.
When the thermal receiver has the above configuration, since the honeycomb unit has open pores, it is possible to smoothly load silicon into the inside of the pores when loading the silicon.

In the thermal receiver according to a seventeenth aspect, a heat insulating material is preferably interposed between the heat absorption body and the support body.
When the thermal receiver has the above configuration, it is possible to effectively prevent heat from scattering from the heat absorption body to the support body using the heat insulating material, and to firmly hold the heat absorption body using the heat insulating body.

In a solar thermal power generation device according to an eighteenth aspect, the thermal receiver according to the invention is used.
Since the solar thermal power generation device according to the invention uses the thermal receiver according to the invention, it is possible to more efficiently absorb and store solar light in the heat absorption body so that power generation efficiency improves.

### Brief Description of Drawings

Fig. 1A is a vertical cross-sectional view schematically illustrating a thermal receiver according to a first embodiment of the invention, and Fig. 1B is a front view of the thermal receiver illustrated in Fig. 1A.
Fig. 2A is an enlarged cross-sectional view illustrating a part of an end surface of the thermal receiver according to the first embodiment of the invention, and Fig. 2B is an enlarged cross-sectional view illustrating a part of an end surface of a thermal receiver according to a fourth embodiment of the invention.
Fig. 3A is a front view schematically illustrating a receiver array that configures a solar thermal power generation device according to a fifth embodiment of the invention, and Fig. 3B is a cross-sectional view of the receiver array cut along the line B-B illustrated in Fig. 3A.
Fig. 4A is an explanatory view schematically illustrating the solar thermal power generation apparatus according to the fifth embodiment of the invention. Description of Embodiments

### (First embodiment)

Hereinafter, a first embodiment, which is an embodiment of the thermal receiver of the invention, will be described with reference to the accompanying drawings.

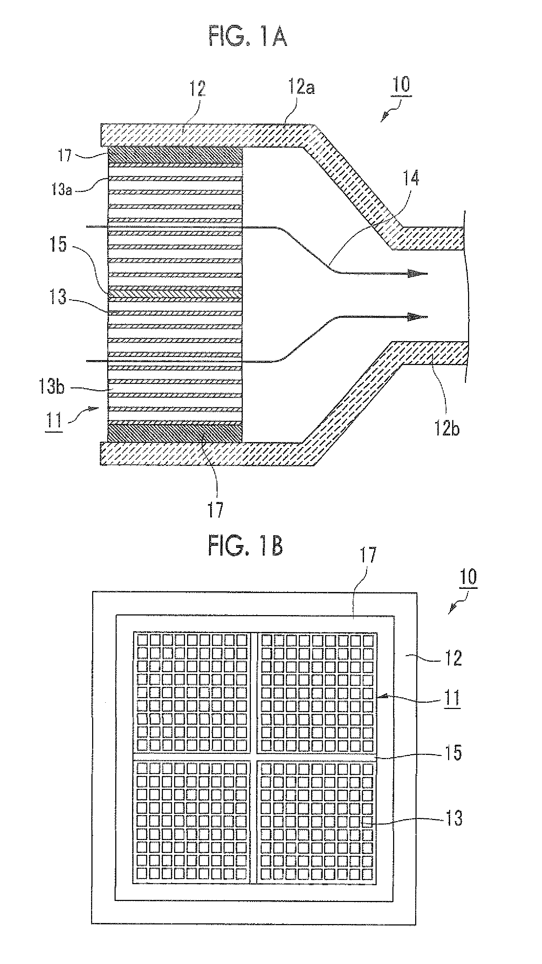

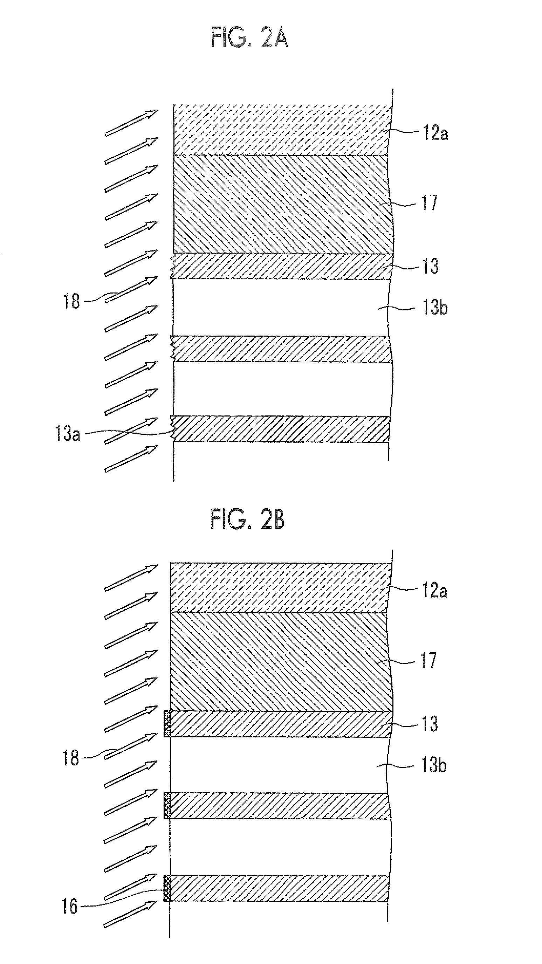

Fig. 1A is a vertical cross-sectional view schematically illustrating a thermal receiver according to the first embodiment of the invention, and Fig. 1B is a front view of the thermal receiver illustrated in Fig. 1A. Fig. 2A is an enlarged cross-sectional view illustrating a part of an end surface of the thermal receiver according to the first embodiment of the invention.

As illustrated in Figs. 1A and 1B, a thermal receiver 10 according to the invention is configured to include a heat absorption body 11, to which multiple honeycomb units 13 having multiple flow paths 13b for the circulation of a heat medium 14 are adhered through a seal material layer 15, and a support body 12 which accommodates and supports the heat absorption body 11 and allows the circulation of the heat medium 14. In addition, a heat insulating material 17 made of an inorganic fiber is interposed between the heat absorption body 11 and the support body 12, and the heat absorption body 11 is supported and fixed by the support body 12 through the heat insulating material 17.

The honeycomb unit 13 is made of porous silicon carbide having open pores. When the honeycomb unit is configured by including porous silicon carbide, the thermal conductivity of the honeycomb unit 13 increases, and it is possible to smoothly transfer the obtained heat to the heat medium.

The porosity of the honeycomb unit 13 is not particularly limited, but is desirably 35% to 60%. When the porosity of the honeycomb unit 13 is less than 35%, it becomes difficult to manufacture the honeycomb unit 13. In addition, when the porosity of the honeycomb unit 13 exceeds 60%, the strength of the honeycomb unit 13 decreases, and the honeycomb unit becomes liable to be broken due to the thermal history (repetition of the increase and decrease in the temperature) when used as a thermal receiver.
Meanwhile, the porosity can be measured using a mercury intrusion method.

The average pore diameter of the honeycomb unit 13 is desirably 5 µm to 30 µm. When the average pore diameter of the honeycomb unit 13 is less than 5 µm, it becomes difficult to manufacture the honeycomb unit, and, on the other hand, when the average pore diameter of the honeycomb unit 13 exceeds 30 µm, the mechanical strength of the honeycomb unit 13 decreases.

A surface 13a of the honeycomb unit 13, to which solar light is radiated, has undergone a blasting process treatment, and has become a coarsened surface. The surface roughness Ra of the coarsened surface is desirably 0.5 µm to 5.0 µm while also depending on the material of the honeycomb unit 13. When the surface roughness Ra is 1.5 µm or more, it is possible to sufficiently decrease the reflectivity. When the surface roughness Ra increases, the reflectivity decreases; however, when the surface roughness is increased up to approximately 5.0 µm, the reflectivity does not further decrease. For example, in the case of the honeycomb unit 13 made of porous silicon carbide, the surface roughness Ra is desirably 2.5 µm to 3.5 µm, and more desirably 3.1 µm to 3.3 µm. In the case of the honeycomb unit 13 made of dense silicon carbide, the surface roughness is desirably 0.5 µm to 3.5 µm. In the case of the honeycomb unit 13 loaded with silicon, the surface roughness is desirably 0.8 µm to 3.5 µm.
When the surface roughness Ra is within the above range, it is possible to more reliably reduce the reflection of solar light.

The reflectivity of the honeycomb unit 13 is desirably low; however, in a case in which the surface treatment is not carried out, the reflectivity becomes high. However, in an invention according to the embodiment of the invention, when a coarsened surface is formed, it is possible to suppress the reflectivity in a range of 9% to 27%.
In addition, when porous silicon carbide is used, and a coarsened surface is formed, it is possible to suppress the reflectivity in a range of 9% to 21%.
In an invention according to the embodiment of the invention, it is possible to set the reflectivity of the honeycomb unit 13 to be 0.73 to 0.91.
In a case in which the honeycomb unit 13 is made of porous silicon carbide, it is possible to suppress the reflectivity of the honeycomb unit to 0.73 to 0.91.
The thermal conductivity of the honeycomb unit 13 is desirably 45 W/mK to 120 W/mK. The density of the honeycomb unit 13 is desirably 2.7 g/cm³ to 3.1 g/cm³.

In the honeycomb unit 13 according to the embodiment of the invention, when forming a cross-section perpendicular to the longitudinal direction, the number of the flow paths 13b per square centimeter is desirably 31.0 paths/cm² to 93.0 paths/cm². In a case in which the number of the flow paths 13b in the honeycomb unit 13 is less than 31.0 paths/cm², since the number of the flow paths 13b in the honeycomb unit 13 is small, it becomes difficult for the honeycomb unit 13 to efficiently exchange heat with the heat medium 14, and, on the other hand, when the number of the flow paths 13b in the honeycomb unit 13 exceeds 93.0 paths/cm², since the cross-sectional area of a flow path 13b in the honeycomb unit 13 becomes small, it becomes difficult for the heat medium 14 to circulate.

In addition, the thickness of a wall portion between the flow paths in the honeycomb unit 13 is desirably 0.1 mm to 0.5 mm. When the thickness of the wall portion between the flow paths in the honeycomb unit 13 is less than 0.1 mm, the mechanical strength of the wall portion decreases such that the honeycomb unit 13 becomes liable to be broken, and, on the other hand, when the thickness of the wall portion between the flow paths in the honeycomb unit 13 exceeds 0.5 mm, since the wall portion becomes too thick such that the circulation amount of the heat medium 14 with respect to the area of the honeycomb unit 13 decreases, the thermal efficiency degrades.

The heat absorption body 11 is produced by adhering and binding multiple honeycomb units 13 through the adhesive layer 15. As adhesive paste that forms the adhesive layer 15, it is possible to use silicon, slurry including silicon, adhesive paste including at least one of inorganic particles, an inorganic fiber and an inorganic binder. The adhesive paste may include an organic binder.

Examples of the inorganic particles included in the adhesive paste include carbides, nitrides and the like. Specific examples include inorganic powder made of silicon carbide, silicon nitride or boron nitride, and the like. The inorganic particles may be used solely or in combination of two or more kinds. Among the inorganic particles, silicon carbide having excellent thermal conductivity is desirable.

In a case in which the adhesive paste is used, the lower limit of the content of the inorganic particles in the adhesive layer 15 is desirably 3 weight%, more desirably 10 weight%, and still more desirably 20 weight%. On the other hand, the upper limit of the content of the inorganic particles in the adhesive layer 15 is desirably 80 weights, and more desirably 40 weight%. When the content of the inorganic particles in the adhesive layer 15 is less than 3 weight%, a decrease in the thermal conductivity of the adhesive layer 15 becomes liable to be caused, and, on the other hand, when the content of the inorganic particles in the adhesive layer 15 exceeds 80 weight%, a decrease in the adhesion strength of the adhesive layer 15 is liable to be caused in a case in which the adhesive layer 15 is exposed to a high temperature.

In a case in which the adhesive paste is used, examples of the inorganic fiber included in the adhesive layer 15 include ceramic fibers, such as silica-alumina, mullite, alumina and silica; and the like. The inorganic fiber may be used solely or in combination of two or more kinds. Among the inorganic fibers, an alumina fiber is desirable.

The lower limit of the content of the inorganic fiber in the adhesive layer 15 is desirably 10 weight%, and more desirably 20 weight%. On the other hand, the upper limit of the content of the inorganic fiber in the adhesive layer 15 is desirably 70 weight%, and more desirably 40 weight%. When the content of the inorganic fiber in the adhesive layer 15 is less than 10 weight%, the elasticity of the adhesive layer 15 becomes liable to decrease, and on the other hand, when the content of the inorganic fiber in the adhesive layer 15 exceeds 70 weight%, a decrease in the thermal conductivity of the adhesive layer 15 is liable to be caused.

In a case in which the adhesive paste is used, examples of the inorganic binder included in the adhesive layer 15 include solid contents, such as a silica sol and an alumina sol. The inorganic binder may be used solely or in combination of two or more kinds. Among the inorganic binders, a silica sol is desirable.

In addition, the lower limit of the content of the inorganic binder in the adhesive layer 15 is desirably 1 weight%, and more desirably 5 weight% in terms of solid content. On the other hand, the upper limit of the content of the inorganic binder in the adhesive layer 15 is desirably 30 weight%, and more desirably 15 weight% in terms of solid content. When the content of the inorganic binder in the adhesive layer 15 is less than 1 weight% in terms of solid content, a decrease in the adhesion strength of the adhesive layer 15 is liable to be caused, and, on the other hand, when the content of the inorganic binder in the adhesive layer 15 exceeds 30 weight% in terms of solid content, a decrease in the thermal conductivity of the adhesive layer 15 is liable to be caused.

In a case in which the adhesive paste is used, examples of the organic binder included in the adhesive layer 15 include polyvinyl alcohols, methyl cellulose, ethyl cellulose, carboxymethyl cellulose and the like. The organic binder may be used solely or in combination of two or more kinds. Among the organic binders, carboxymethyl cellulose is desirable.

The lower limit of the content of the organic binder in the adhesive layer 15 is desirably 0.1 weight%, and more desirably 0.4 weight% in terms of solid content, and, on the other hand, the upper limit of the content of the organic binder is desirably 5.0 weight%, and more desirably 1.0 weight% in terms of solid content. When the content of the organic binder in the adhesive layer 15 is less than 0.1 weight%, it becomes difficult to suppress the migration of the adhesive layer 15, and, on the other hand, when the content of the organic binder in the adhesive layer 15 exceeds 5.0 weight%, the amount of gas generated due to the decomposition of the organic binder becomes too large such that a decrease in the adhesive force of the adhesive layer 15 becomes liable to be caused.

The organic binder included in the adhesive layer 15 is decomposed and eliminated since the temperature of the honeycomb unit 13 increases while the heat absorption body 11 is in use; however, since the solid contents of the inorganic particles and the inorganic binder are included in the adhesive layer 15, it is possible to maintain a sufficient adhesive force.

The support body 12 has a rectangular front cross-sectional shape as illustrated in Fig. 1B, but the overall shape of the support body 12 is a funnel shape. That is, the cross-section of a heat collecting portion 12a, in which the heat absorption body 11 is accommodated and into the heat medium 14 flows, (the cross-section in parallel to the surface of the heat absorption body 11 which receives solar light 18) has a large area; however, the cross section is shifted in parallel in the exit direction of the heat medium 14, the area of the cross-section gradually decreases, and the cross-sectional area becomes a substantially constant area at an exit 12b for the heat medium 14.

The material of the support body 12 is not particularly limited; however, in a case in which the heat absorption body 11 is used as a thermal receiver used for solar thermal power generation, since the heat absorption body 11 reaches approximately 1000°C, the material of the support body needs to have thermal resistance, and thus is preferably a metal or a ceramic.
Examples of the metal material include iron, nickel, chromium, aluminum, tungsten, molybdenum, titanium, lead, copper, zinc, alloys thereof, and the like. In addition, examples of the ceramic include nitride ceramics, such as aluminum nitride, silicon nitride, boron nitride and titanium nitride; carbide ceramics, such as silicon carbide, zirconium carbide, titanium carbide, tantalum carbide and tungsten carbide; oxide ceramics, such as silica, alumina, mullite and zirconia; and the like. Examples of additional materials of the support body 12 include complexes of a metal and a nitride ceramic, complexes of a metal and a carbide ceramic, and the like. Among the above, the material of the support body is particularly preferably silicon carbide or alumina in terms of thermal resistance.

In the thermal receiver 10 according to the invention, the heat insulating material 17 is interposed between the heat absorption body 11 and the support body 12. When the heat insulting material 17 is provided, it is possible to effectively prevent heat from scattering from the heat absorption body 11 to the support body 12.
The material of the heat insulating material 17 is not particularly limited, and may be a material including a variety of inorganic materials, such as inorganic fibers, inorganic particles and inorganic binders, but is preferably a material which is made of an inorganic fiber and has a mat shape. In the embodiment, an example in which a mat having a rectangular shape in the planar view, which is made of an inorganic fiber, is used as the heat insulating material 17 will be described below. The heat insulating material 17 is configured of a mat, which is made of an inorganic fiber and has a rectangular shape in the planar view, or by laminating multiple mats, and, when the heat insulating material 17 is accommodated in the support body 12 in a state in which the heat insulating material 17 is wound around the side surfaces of the heat absorption body 11, it is possible to support and fix the heat absorption body 11 in the support body 12.

The inorganic fiber that configures the mat is not particularly limited, and examples thereof include an alumina-silica fiber, an alumina fiber, a silica fiber and the like. The inorganic fiber may be changed depending on the characteristics and the like required for the heat insulating material 17, such as thermal resistance or wind erosion resistance. In a case in which an alumina-silica fiber is used as the inorganic fiber that configures the mat of the heat insulating material 17, an alumina-silica fiber having a composition ratio between alumina and silica of 60:40 to 80:20 is desirably used.

The mat desirably has undergone a needle punching treatment. When the mat has undergone a needle punching treatment, the constituent material, such as the inorganic fiber, that configures the mat is not easily detached. In a case in which a laminate of multiple mats is used, it is possible to form a single organized mat shape. In addition, when a needle punching treatment is carried out on the mat in the width direction, which is perpendicular to the longitudinal direction, since fold lines are generated in the width direction of the mat at portions on which the needle punching treatment has been carried out, it becomes easy to wind the mat around the heat absorption body 11.

In addition, as the heat insulating material 17, a material obtained by impregnating an organic binder including an acryl-based resin and the like in the mat, and compressively drying the mat so as to have a thin thickness may be used. The above heat insulating material 17 can be used in the following manner. First, the heat insulating material 17 is wound around the heat absorption body 11, and pushed into the support body 12 so that the heat absorption body 11 is fitted into the support body 12. In addition, when the reflected light of solar light, which is collected using heliostats, is radiated on the heat absorption body 11, since the temperature of the heat absorption body 11 increases to approximately 1000°C, the organic binder in the mat is decomposed and eliminated, and the compressed state formed by the organic binder is released. Thereby, the heat absorption body 11 is firmly held and fixed by the support body 12.

The thickness of the heat insulating material 17 is desirably 3 mm to 14 mm. When the thickness of the heat insulating material 17 is less than 3 mm, it is difficult to obtain a sufficient heat insulating property, and, when the thickness of the heat insulating material 17 exceeds 14 mm, it becomes difficult to fit the heat insulating material into the heat absorption body 11.

Hereinafter, a method for manufacturing the thermal receiver 10 according to the embodiment will be described using an example.
First, the porous silicon carbide that configures the honeycomb unit 13 is manufactured.
When manufacturing the porous silicon carbide, silicon carbide powder having different average particle diameters, which are a raw material, the organic binder, a plasticizer, a lubricant, water and the like are mixed, thereby preparing a wet mixture.

Subsequently, a molding process, in which the wet mixture is injected into an extrusion molding machine, and is extrusion-molded, is carried out, thereby manufacturing a quadratic prismatic honeycomb compact having multiple flow paths formed in the longitudinal direction.

Next, a cutting process, in which both ends of the honeycomb compact are cut using a cutting apparatus, is carried out so as to cut the honeycomb compact into a predetermined length, and the cut honeycomb compact is dried using a drying machine.

Next, a defatting process, in which the organic substances in the honeycomb compact are heated in a defatting furnace, is carried out, the compact is transported to a firing furnace, and a firing process is carried out, thereby manufacturing the honeycomb fired compact. Thereby, the honeycomb unit 13 made of porous silicon carbide is obtained. In addition, the blasting process treatment is carried out on a surface 13a of the honeycomb unit 13 so as to form a coarsened surface.

When the obtained multiple honeycomb units 13 are adhered to each other using the adhesive paste, the heat absorption body 11, in which multiple honeycomb units 13 are joined through the adhesive layer 15, is obtained.
Meanwhile, the blasting process treatment may be carried out after the multiple honeycomb units 13 are adhered to each other using the adhesive paste or the like.

The support body 12 can be manufactured using a method which has been thus far used. When manufacturing the support body 12 made of a ceramic, the support body can be manufactured by undergoing the defatting process and the firing process after carrying out the pressing, injection molding, casting and the like of a mixture including ceramic powder, the organic binder and the like.

When assembling the thermal receiver 10, the heat insulating material 17 is wound around the heat absorption body 11 manufactured using the above method, and the heat absorption body 11 having the heat insulating material 17 wound therearound is pushed into the support body 12 so as to be fixed, whereby it is possible to assemble the thermal receiver 10.

Hereinafter, the actions and effects of the thermal receiver of the embodiment will be listed.
(1) In the thermal receiver according to the embodiment, since the polishing treatment (blasting process treatment) is carried out on the surface, to which solar light (light collected using the heliostats), of the honeycomb unit included in the heat absorption body, it is possible to suppress the reflection of solar light, and it is possible to more efficiently heat the thermal receiver by reducing the heat loss, which is caused by the reflection of solar light.

(2) In the thermal receiver of the embodiment, since the honeycomb unit included in the heat absorption body is made of silicon carbide, the thermal conductivity is high, and it is possible to smoothly transfer the obtained heat to the heat medium, whereby the thermal receiver has a high heat storing property.

(3) In the thermal receiver of the embodiment, in the honeycomb unit included in the heat absorption body, the flow paths are formed at 31.0 paths/cm² to 93.0 paths/cm², the thickness of the wall portion between the flow paths is 0.1 mm to 0.4 mm, the porosity of the honeycomb unit is 35% to 60%, and the average pore diameter is 5 µm to 30 µm. Therefore, it is possible to efficiently circulate the heat medium in the flow paths while maintaining the strength as the heat absorption body, whereby heat is efficiently transferred to the heat medium from the heat absorption body, and the thermal receiver becomes excellent in terms of strength and heat storing property.

(4) In the thermal receiver of the embodiment, the heat insulating material is interposed between the heat absorption body and the support body, the heat absorption body is firmly held by the heat insulating material, and it is possible to effectively prevent heat from scattering from the heat absorption body to the support body using the heat insulating material.

Hereinafter, examples, in which the first embodiment of the invention is disclosed more specifically, will be described, but the invention is not limited to the examples.

### (Example 1)

### (Process for manufacturing the honeycomb unit)

Coarse powder of silicon carbide having an average particle diameter of 22 µm (52.8 weight%) and fine powder of silicon carbide having an average particle diameter of 0.5 µm (22.6 weight%) were mixed, an acryl resin (2.1 weight%), an organic binder (methyl cellulose, 4.6 weight%), a lubricant (UNIROOF manufactured by NOF Corporation, 2.8 weight%), glycerin (1.3 weight%) and water (13.8 weight%) were added to the obtained mixture, and the components were kneaded, thereby obtaining a wet mixture. After that, an extrusion molding process, in which the obtained wet mixture was extrusion-molded, was carried out, thereby manufacturing a quadratic prismatic honeycomb compact.

Next, the raw honeycomb compact was dried using a microwave drying machine, thereby producing a dried body of the honeycomb compact.

A defatting process, in which the dried body of the honeycomb compact was defatted at 400°C, was carried out, a firing process was carried out under conditions of an argon atmosphere, a normal pressure, 2200°C and 3 hours, thereby manufacturing a honeycomb fired compact (honeycomb unit 13) made of porous silicon carbide, in which the porosity was 42%, the average pore diameter was 11 µm, the size was 34.3 mm x 34.3 mm x 45 mm, the number of the flow paths (flow path density) was 50 cells/cm², and the thickness of the wall portion of the flow path was 0.25 mm (10 mil).
The thermal conductivity of the obtained honeycomb unit 13 was 45 W/m·K, and the density was 2.7 g/cm³. Meanwhile, the thermal conductivity of the honeycomb unit 13 was measured using a laser flash method. In addition, the density of the honeycomb unit was measured using an Archimedes method.

Next, the blasting process treatment was carried out on the surface 13a of the honeycomb unit 13.
The blasting process treatment was a sand blasting process treatment, in which silicon carbide particles were used, and the sand blasting process treatment was carried out under conditions of a vantage of silicon carbide of 400, an exit diameter φ of a nozzle of 11.8 cm, a spraying angle of 90°, a spraying pressure of 4 kg/cm² and a flow amount of 100 g/hr.
Due to the blasting process treatment, the surface roughness Ra on the surface 13a of the honeycomb unit 13 became 3.2 µm. Meanwhile, the surface roughness Ra was measured based on the arithmetic average roughness described in JIS B0601.

### (Process for manufacturing the heat absorption body)

Four honeycomb units 13, on which the surface treatment has been carried out, were assembled as illustrated in Fig. 1B, silicon was placed on the top surface, bottom surface and the like (side surfaces excluding end surfaces) of the honeycomb units 13 in a vacuum, and heated. Thereby, the honeycomb units 13 were coupled using the silicon, thereby manufacturing the heat absorption body 11.

### (Process for manufacturing the thermal receiver)

The heat insulating material 17 was wound around the obtained heat absorption body 11, and inserted into the support body 12. Thereby the thermal receiver 10 was obtained.
As the heat insulating material 17, a heat insulating material, which was a mat-like inorganic fiber made of Al₂O₃ and SiO₂ at a composition ratio of 72:28 (weight ratio), and had an average fiber diameter of the inorganic fiber of 5.1 µm, an average fiber length of 60 mm, a bulk density of 0.15 g/cm³, and a fiber density of 1400 g/m², was used and wound so as to obtain a thickness of 14 mm.

The thermal conductivity of the honeycomb unit 13 the thermal conductivity of the honeycomb unit 13 was measured using a laser flash method. In addition, the density of the honeycomb unit was measured using an Archimedes method. The thermal conductivity of the obtained honeycomb unit 13 was 45 W/m.K, and the density was 2.7 g/cm³.
The reflectivity of light on the surface 13a of the obtained thermal receiver 10 was measured under conditions of an atmosphere at room temperature (25°C) and a wavelength of 3 µm to 30 µm using a spectrophotometer (manufactured by Perkin Elmer Inc., System 200-type). In addition, the radiation rate of light on the surface 13a of the thermal receiver 10 was measured under conditions of an atmosphere at room temperature (25°C) and a wavelength of 3 µm to 30 µm using a spectrophotometer (manufactured by Perkin Elmer Inc., System 200-type).
The reflectivity of the honeycomb unit 13 in Example 1 was 21%, and the radiation rate was 0.79.
The measurement results of the reflectivity and the radiation rate are described in Table 1.

### (Examples 2 and 3)

The surface roughness Ra on the surface 13a of the honeycomb unit 13 was changed to 3.1 µm in Example 2, and to 3.3 µm in Example 3 as described in Table 1. In addition, the honeycomb units 13 were manufactured in the same manner as in Example 1 except for the above, and the surface roughness, thermal conductivity and density of the honeycomb units 13 were measured in the same manner as in Example 1. The thermal conductivity of the obtained honeycomb unit 13 of Example 2 was 45 W/m.K, and the density was 2.7 g/cm³, and the thermal conductivity of the obtained honeycomb unit 13 of Example 3 was 45 W/m.K, and the density was 2.7 g/cm³.
Next, the thermal receivers 10 were manufactured in the same manner as in Example 1. After that, the reflectivity and the radiation rate on the surfaces 13a of the thermal receivers 10 were measured. The reflectivity of the honeycomb unit 13 in Example 2 was 15%, and the radiation rate was 0.85, and the reflectivity of the honeycomb unit 13 in Example 3 was 13%, and the radiation rate was 0.87. The measurement results of the reflectivity and the radiation rate are described in Table 1.

### (Comparative example 1)

The blasting process treatment was not carried out on the surface of the honeycomb unit 13 in Example 1. In addition, the honeycomb unit 13 was manufactured in the same manner as in Example 1 except for the above, and the surface roughness, thermal conductivity and density of the honeycomb unit 13 were measured in the same manner as in Example 1. The surface roughness Ra on the surface 13a of the honeycomb unit 13 of Comparative example 1 was 2.4 µm. The thermal conductivity of the honeycomb unit 13 of Comparative example 1 was 45 W/m•K, and the density was 2.7 g/cm³. Next, the thermal receiver 10 was manufactured in the same manner as in Example 1. After that, the reflectivity and the radiation rate on the surface 13a of the thermal receiver 10 were measured.
The reflectivity of the honeycomb unit 13 in Comparative example 1 was 25%, and the radiation rate was 0.75.
The measurement results of the reflectivity and the radiation rate are described in Table 1.

### (Second embodiment)

Hereinafter, a second embodiment, which is an embodiment of the thermal receiver of the invention, will be described.
The thermal receiver according to the present embodiment is configured in the same manner as the thermal receiver according to the first embodiment of the invention except that the honeycomb unit is made of dense silicon carbide. The porosity of the honeycomb unit made of dense silicon carbide is 98% to 99%.

Therefore, hereinafter, a honeycomb unit made of dense silicon carbide will be mainly descried. The honeycomb unit made of dense silicon carbide can be manufactured by mixing silicon carbide powder, a sintering aid, boron (B), carbon, the organic binder, a plasticizer, a lubricant, water and the like, carrying out extrusion molding, and carrying out drying and a firing treatment.

When the honeycomb unit is a dense body, the heat storing property becomes larger than in the honeycomb unit made of porous silicon carbide, and, since the thermal conductivity extremely increases, it is possible to smoothly transfer the obtained heat to the heat medium.

Hereinafter, the actions and effects of the thermal receiver of the embodiment will be listed.
The embodiment does not only exhibit the actions and effects of (1), (2) and (4) of the first embodiment, but also exhibits the following effect.

(5) In the thermal receiver of the embodiment, since the heat absorption body is configured by joining the honeycomb units made of dense silicon carbide through the adhesive layer, the heat storing property of the heat absorption body increases, and the thermal conductivity extremely increases, whereby it is possible to smoothly transfer the obtained heat to the heat medium.

Hereinafter, examples, in which the second embodiment of the invention is disclosed more specifically, will be described, but the invention is not limited only to the examples.

### (Example 4)

The honeycomb unit 13 was manufactured using dense silicon carbide. The honeycomb unit 13 made of dense silicon carbide was manufactured by mixing silicon carbide powder, boron (B), carbon, the organic binder, a plasticizer, a lubricant, water and the like so as to prepare a wet mixture, carrying out extrusion molding on the wet mixture, and carrying out drying and a firing treatment. In addition, the surface roughness, thermal conductivity and density of the honeycomb unit 13 were measured in the same manner as in Example 1.
As a result, the surface roughness Ra on the surface 13a of the honeycomb unit 13 was 0.7 µm. In addition, the thermal conductivity of the honeycomb unit 13 was 80 W/m•K, and the density was 3.1 g/cm³. The reflectivity on the surface 13a of the honeycomb unit 13 was 22%, and the radiation rate was 0.78.
Next, the thermal receiver 10 was manufactured in the same manner as in Example 1, and the reflectivity and the radiation rate on the surface 13a of the thermal receiver 10 were measured in the same manner as in Example 1. The measurement results of the reflectivity and the radiation rate are described in Table 1.

### (Comparative example 2)

The blasting process treatment was not carried out on the surface of the honeycomb unit 13 in Example 4. The honeycomb unit 13 was manufactured in the same manner as in Example 4 except for the above, and the surface roughness, thermal conductivity and density of the honeycomb unit 13 were measured. The surface roughness Ra on the surface 13a of the honeycomb unit 13 was 0.2 µm. In addition, the thermal conductivity of the honeycomb unit 13 was 80 W/m.K, and the density was 3.1 g/cm³.
Next, the thermal receiver 10 was manufactured in the same manner as in Example 1, and the reflectivity and the radiation rate were measured. The reflectivity on the surface 13a of the honeycomb unit 13 was 29%, and the radiation rate was 0.71.

### (Third embodiment)

Hereinafter, a third embodiment, which is an embodiment of the thermal receiver of the invention, will be described.
The thermal receiver according to the present embodiment is configured in the same manner as in the thermal receiver according to the first embodiment of the invention except that a honeycomb unit made of porous silicon carbide having pores loaded with silicon was used.

Therefore, hereinafter, the honeycomb unit made of porous silicon carbide having pores loaded with silicon will be mainly descried.

When the pores in the honeycomb unit made of porous silicon carbide is loaded with silicon, for example, the following method can be applied.
First, multiple honeycomb fired compacts (honeycomb units), in which silicon fine powder had been impregnated, were combined using predetermined fixing devices and the like so as to form the shape of the heat absorption body, and then heated, or multiple honeycomb fired compacts (honeycomb units), in which silicon fine powder had not been impregnated, were combined, then, silicon was placed on side surfaces excluding end surfaces, such as the top surface and the bottom surface, of the honeycomb fired compact (honeycomb unit), and heated in a vacuum.
In addition, multiple honeycomb fired compacts (honeycomb units) may be joined by coating a slurry form of silicon powder on the side surfaces of the honeycomb fired compacts (honeycomb units), heating the honeycomb fired compacts in a state in which two honeycomb fired compacts were brought into contact with each other through the coated surfaces so as to adhere the compacts, and repeating the above operation.

The above method loaded the open pores in the honeycomb units (porous silicon carbide) with silicon, and even made the silicon spread into the space between the side surfaces of the honeycomb units so as to form the adhesive layer, whereby it is possible to adhere the honeycomb units through the silicon layer.

In addition, it is also possible to apply a method in which the slurry including silicon is impregnated. In this method, the slurry including the silicon is used for the honeycomb unit, the silicon is impregnated in the honeycomb units, and multiple honeycomb units, in which the silicon has been impregnated, are adhered through the silicon.

In the honeycomb unit made of porous silicon carbide having pores loaded with silicon, the reflectivity of solar light is increased due to the silicon; however, in the thermal receiver according to the embodiment, since a polishing treatment (for example, the blasting process treatment) has been carried out on the surface 13a of the honeycomb unit 13, it is possible to suppress the reflectivity of solar light.

Hereinafter, the actions and effects of the thermal receiver of the embodiment will be listed.
The embodiment does not only exhibit the actions and effects of (1) to (4) of the first embodiment of the invention, but also exhibits the following effect.

(6) In the thermal receiver of the embodiment, since the heat absorption body is made up of multiple honeycomb units having open pores in the honeycomb units loaded with silicon, and the honeycomb units are firmly adhered to each other due to the silicon, the heat storing property of the heat absorption body increases, and the thermal conductivity becomes extremely high, and therefore it is possible to smoothly transfer the obtained heat to the heat medium.

Hereinafter, examples, in which the third embodiment of the invention is disclosed more specifically, will be described, but the invention is not limited only to the examples.

### (Example 5)

The honeycomb unit 13 was manufactured using porous silicon carbide having pores loaded with silicon.
First, a honeycomb fired compact made of porous silicon carbide was manufactured in the same manner as in Example 1. Next, the honeycomb unit 13 was manufactured. In addition, the surface roughness, thermal conductivity and density of the honeycomb unit 13 were measured in the same manner as in Example 1. The surface roughness Ra on the surface 13a of the honeycomb unit 13 was 3.3 µm. In addition, the thermal conductivity of the honeycomb unit 13 was 120 W/m·K, and the density was 2.8 g/cm³.
Next, the thermal receiver 10 was manufactured in the same manner as in Example 1, and the reflectivity and the radiation rate on the surface 13a of the thermal receiver 10 were measured. The reflectivity on the surface 13a of the honeycomb unit 13 wars 27%, and the radiation rate was 0.73. The measurement results of the reflectivity and the radiation rate are described in Table 1.

### (Process for loading silicon)

Next, a phenol resin (carburization rate 30 weight%) was impregnated at room temperature and a normal pressure in the obtained fired compact of the honeycomb unit 13, which was made of porous silicon carbide, and, subsequently dried.

Next, silicon particles were placed on the top surface and the bottom surface (side surfaces excluding the end surfaces) of the fired compact of the honeycomb unit, silicon particles were held under conditions of a vacuum at 1650°C for two hours so as to be fused, and silicon was loaded into the open pores in the fired compact of the honeycomb unit.
Meanwhile, the impregnated amount of the silicon was 40 parts by weight with respect to 100 parts by weight of silicon carbide.

The thermal conductivity of the obtained honeycomb unit 13 was 120 W/m•K, and the density was 2.80 g/cm³.

### (Comparative example 3)

The blasting process treatment was not carried out on the surface of the honeycomb unit 13 in Example 5. The honeycomb unit 13 and the thermal receiver 10 were manufactured in the same manner as in Example 1 except for the above.
Regarding the manufactured honeycomb unit 13, the surface roughness, thermal conductivity and density of the honeycomb unit 13 were measured in the same manner as in Example 1. The surface roughness Ra on the surface 13a of the honeycomb unit 13 was 0.7 µm. In addition, the thermal conductivity of the honeycomb unit 13 was 120 W/m•K, and the density was 2.8 g/cm³.
In addition, regarding the manufactured thermal receiver, the reflectivity and the radiation rate on the surface 13a of the thermal receiver 10 were measured in the same manner as in Example 1. The reflectivity on the surface 13a of the honeycomb unit 13 was 36%, and the radiation rate was 0.64.
The measurement results of the reflectivity and the radiation rate are described in Table 1.

### (Fourth embodiment)

Hereinafter, a fourth embodiment, which is another embodiment of the thermal receiver of the invention, will be described with reference to the accompanying drawings. The thermal receiver according to the present embodiment is configured in the same manner as in the thermal receiver according to the first embodiment except that the surface treatment is a coating treatment.

Therefore, hereinafter, the coating treatment and a coating layer formed through the coating treatment will be mainly described.

Fig. 2B is an enlarged cross-sectional view illustrating a part of an end surface of the thermal receiver according to the fourth embodiment of the invention.
As illustrated in Fig. 2B, in the thermal receiver 10 according to the invention, coating layers 16 are formed on the surfaces of the flow path walls of the honeycomb unit 13, to which solar light is radiated. Even with the above coating layers 16, similarly to the coarsened surface formed through the polishing treatment according to the first embodiment of the invention, it is possible to reduce the reflectivity of the surface to which solar light is radiated.

The color of the coating layer 16 is desirably black. When the thermal receiver has the above configuration, it is possible to efficiently absorb light at the thermal receiver, and to further suppress the reflection of solar light.

Examples of the coating layer 16 include a porous carbon layer, a layer made of an infrared black body coating composition including an infrared radiator mainly including an oxide of a transition element (crystalline inorganic material) and an inorganic compound having a softening temperature of 400°C to 1000°C (amorphous inorganic material). Since the coating layer having the above composition is excellent in terms of adhesion with the heat absorption body (the surface of the flow path wall of the honeycomb unit 13), the coating layer is not easily detached even when the heat absorption body is into a high-temperature state.

Meanwhile, the coating layer in the invention is not only the coating layer newly formed on the surface of the flow path wall of the honeycomb unit 13, but also includes a layer functioning as the coating layer, which is formed by changing the surface portion of the flow path wall of the honeycomb unit 13 to a different structure from the inside of the flow path wall.
The porous carbon layer can be formed by coating and heating a coating agent including carbon black and the like.
In addition, even when the honeycomb unit 13 made of porous silicon carbide is converted into carbon, it is possible to form the coating layer.
Furthermore, even when silicon is removed from the honeycomb unit 13 made of porous silicon carbide loaded with silicon, and the exposed porous silicon carbide is further converted into carbon, it is possible to produce the coating layer 16. When the exposed porous silicon carbide is converted into carbon, a heating treatment may be carried out, for example, at 1600°C to 1700°C for 96 hours or more in a surrounding atmosphere set to a vacuum of 0.8 Torr or less. Thereby, silicon is removed from the honeycomb unit 13, and exposed porous silicon carbide is converted into carbon.

The oxide of a transition element included in the infrared radiator is, for example, at least one selected from manganese dioxide, manganese oxide, iron oxide, cobalt oxide, copper oxide and chromium oxide. The oxide may be used solely or in combination of two or more kinds. Since the above oxide of a transition metal has a high radiation rate in the infrared range, it is possible to form the coating layer 16 having a high radiation rate.
The inorganic compound having a softening temperature of 400°C to 1000°C is preferably a high expansion glass with a low melting point, and, specifically, is at least one selected from aluminosilicate glass, potassium lead glass, soda lead glass, soda zinc glass, soda barium glass, barium glass, boron glass, strontium glass, high lead glass and potassium soda lead glass.
When fused, coated on the surface 13a of the honeycomb unit 13, and subjected to a heating and firing treatment, since the high expansion glass with a low melting point has favorable affinity to the honeycomb unit 13, it is possible to easily and firmly form the coating layer 16 on the surface 13a of the honeycomb unit 13.
If the softening temperature of the inorganic compound is less than 400°C, when the temperature of the honeycomb unit 13 increases after the coating layer 16 is formed, the coating layer 16 becomes easy to flow so as to be liable to be detached and dropped, and, on the other hand, when the softening temperature of the inorganic compound exceeds 1000°C, it becomes difficult to fuse and coat the coating material on the honeycomb unit 13.

The thickness of the coating layer 16 is not particularly limited, but is desirably 2 µm to 50 µm. When the thickness of the coating layer 16 is less than 2 µm, the effect of reducing the reflectivity on the surface 13a of the honeycomb unit 13 decreases, and, when the thickness of the coating layer 16 exceeds 50 µm, it becomes difficult to form the coating layer 16 having a uniform thickness.
The coarsened surface may be formed on the surface of the coating layer 16 through the above polishing treatment.
The polishing treatment is desirably a blasting process, and the surface roughness of the coarsened surface of the coating layer is desirably Ra 0.5 µm to 50 µm. When the surface roughness of the coarsened surface of the coating layer is in the above range, it is possible to reliably reduce the reflection of solar light.

The coating layer 16 can be formed, for example, in the following order.
First, a coating fluid (coating material) for forming the coating layer 16 is prepared.
The coating fluid is prepared through the wet mixing of the infrared radiator and the inorganic compound. Specifically, the powder of the infrared radiator and the powder of the inorganic compound are prepared so as to have predetermined particle sizes, shapes and the like respectively, the respective powders are dry-mixed at a predetermined blending ratio so as to prepare a powder mixture, furthermore, water is added, and the components are wet-mixed using a ball mill, thereby preparing a slurry. The blending ratio between the powder mixture and water is not particularly limited, but is desirably 100 parts by weight of water with respect to 100 parts by weight of the powder mixture. This is because the slurry needs to have an appropriate viscosity in order for coating on the honeycomb unit 13. In addition, an organic solvent may be added to the coating fluid as necessary.

Subsequently, the adjusted coating fluid is coated on the surface 13a of the honeycomb unit 13. The method for coating the coating fluid on the honeycomb unit 13 is not particularly limited as long as the coating layer 16 having a uniform film thickness can be obtained, and examples thereof include methods, such as spray coating, curtain coating, dipping, transcription and brush coating.

Next, the coated coating fluid is dried and fired so as to form the coating layer 16 having a thickness of 2 µm to 50 µm. The firing temperature is set to a temperature at which the adhesion between the coating layer 16 and the honeycomb unit 13 (the surface of the wall of the flow path) increases. Thereby, the thermal receiver 10 of the embodiment is obtained.

Hereinafter, the actions and effects of the thermal receiver of the embodiment will be listed.
The embodiment does not only exhibit the actions and effects of (2) to (4) of the first embodiment of the invention, but also exhibits the following effect.

Hereinafter, the actions and effects of the thermal receiver of the embodiment will be listed.
(7) In the thermal receiver of the embodiment, since the honeycomb unit included in the heat absorption body has the coating layer formed on the surface (the surface of the flow path wall) to which solar light (light collected from the heliostats) is radiated, it is possible to suppress the reflection of solar light, and it is possible to produce the thermal receiver having a high heat storing property by reducing the heat loss caused by the reflection.

(8) In the thermal receiver of the embodiment, since the coating layer of the heat absorption body is black, it is possible to more efficiently absorb light in the thermal receiver, and to further suppress the reflection of light.

(9) In the thermal receiver of the embodiment, since the coating layer of the heat absorption body is made of an infrared black body coating composition including porous carbon or an infrared radiator mainly including an oxide of a transition element and an inorganic compound having a softening temperature of 400°C to 1000°C, the coating layer is excellent in terms of adhesion with the honeycomb unit (the surface of the flow path wall), and the coating layer is not easily detached even when the thermal receiver is into a high temperature state.

(10) In the thermal receiver of the embodiment, since the thickness of the coating layer of the heat absorption body is 2 µm to 50 µm, it is possible to uniformly coat the coating fluid (coating material) on the surface of the honeycomb unit (flow path wall), and it is possible to produce the thermal receiver in which the coating layer having a desired thickness is formed.

Hereinafter, examples, in which the forth embodiment of the invention is disclosed more specifically, will be described, but the invention is not limited to the examples.

### (Example 6)

The thermal receiver 10 was manufactured in the same manner as in Example 1 except that the coating layer 16 was formed instead of carrying out the blasting process treatment on the surface 13a of the honeycomb unit 13.
The coating layer 16 was formed in the following order.

### (Process for preparing the coating fluid)

MnO₂ powder (65 wt%), Fe₃O₄ powder (5 wt%) and BaO-SiO₂ glass powder (10 wt%) were dry-mixed so as to prepare a powder mixture, 100 parts by weight of water was added to 100 parts by weight of the powder mixture, and the components were wet-mixed using a ball mill, thereby preparing the coating fluid (coating material).

### (Process for coating the coating fluid)

The obtained coating fluid was coated toward the surface 13a of the honeycomb unit 13 through spray coating.
After that, the honeycomb unit 13 having the coated layer formed through spray coating was dried at 100°C for two hours, and a firing process, in which the honeycomb unit was fired at 700°C in the air for one hour, was carried out, thereby forming the coating layer 16 having a thickness of 2 µm. After that, the thermal conductivity and density of the honeycomb unit 13 were measured in the same manner as in Example 1. The thermal conductivity of the honeycomb unit 13 was 45 W/m.K, and the density was 2.7 g/cm³.
The thickness of the coating layer 16 was measured by cutting the coating layer in the thickness direction, and then observing the thickness using a scanning electron microscope.

In addition, regarding the honeycomb unit 13 having the obtained coating layer 16, the reflectivity and the radiation rate were manufactured in the same manner as in Example 1. The reflectivity of the surface 13a of the honeycomb unit 13 was 9%, and the radiation rate was 0.91.
The measurement results of the reflectivity and the radiation rate are described in Table 1.

### (Example 7)

The thermal receiver 10 was manufactured in the same manner as in Example 6 except that the thickness of the coating layer 16 was changed to 50 µm. The thermal conductivity and density of the honeycomb unit 13 were measured in the same manner as in Example 1.
The thermal conductivity of the honeycomb unit 13 was 45 W/m.K, and the density was 2.7 g/cm³.
Regarding the obtained coating layer 16, the reflectivity and the radiation rate were manufactured in the same manner as in Example 1. The reflectivity of the surface 13a of the honeycomb unit 13 was 9%, and the radiation rate was 0.91.
The measurement results of the reflectivity and the radiation rate are described in Table 1.

### (Example 8)

The thermal receiver 10 was manufactured in the same manner as in Example 6 except that coating layer 16 was formed of a porous carbon layer, and the thickness of the coating layer 16 was changed to 50 µm.
The porous carbon layer was formed in the following manner.
That is, the porous carbon layer was formed in the same manner as in Example 6 except that the powder of carbon black was used instead of MnO₂ powder and Fe₃O₄ powder when preparing the coating fluid (coating material), and the thermal conductivity and density of the honeycomb unit 13 were measured in the same manner as in Example 1.
The thermal conductivity of the honeycomb unit 13 was 45 W/m·K, and the density was 2.7 g/cm³.
Regarding the obtained coating layer 16, the reflectivity and the radiation rate were manufactured in the same manner as in Example 1. The reflectivity of the surface 13a of the honeycomb unit 13 was 15%, and the radiation rate was 0.85.
The measurement results of the reflectivity and the radiation rate are described in Table 1.

**[Table 1]**

| | Thermal receiver | Surface treatment | Surface roughness Ra (µm) | Thickness of coating layer (µm) | Reflectivity (%) | Radiation rate (-) | Thermal conductivity (W/m·K) | Density (g/cm³) |
|---|---|---|---|---|---|---|---|---|
| Example 1 | Porous silicon carbide | Blasting process | 3.2 | - | 21 | 0.79 | 45 | 2.7 |
| Example 2 | Porous silicon carbide | Blasting process | 3.1 | - | 15 | 0.85 | 45 | 2.7 |
| Example 3 | Porous silicon carbide | Blasting process | 3.3 | - | 13 | 0.87 | 45 | 2.7 |
| Example 4 | Dense silicon carbide | Blasting process | 0.7 | - | 22 | 0.78 | 80 | 3.1 |
| Example 5 | Porous silicon carbide loaded with silicon | Blasting process | 3.3 | - | 27 | 0.73 | 120 | 2.8 |
| Example 6 | Porous silicon carbide | Coating treatment (infrared black body paint) | - | 2 | 9 | 0.91 | 45 | 2.7 |
| Example 7 | Porous silicon carbide | Coating treatment (infrared black body paint) | - | 50 | 9 | 0.91 | 45 | 2.7 |
| Example 8 | Porous silicon carbide | Coating treatment (porous carbon) | - | 50 | 15 | 0.85 | 45 | 2.7 |
| Comparative example 1 | Porous silicon carbide | None | 2.4 | - | 25 | 0.75 | 45 | 2.7 |
| Comparative example 2 | Dense silicon carbide | None | 0.2 | - | 29 | 0.71 | 80 | 3.1 |
| Comparative example 3 | Porous silicon carbide loaded with silicon | None | 0.7 | - | 36 | 0.64 | 120 | 2.8 |

Hereinafter, the results of Examples 1 to 8 and Comparative examples 1 to 3 will be summarized and described.
As is evident from the results described in Table 1, for the thermal receivers according to Examples 1 to 8, the examples and the comparative examples, in which the material of the thermal receivers was the same, are compared as Examples 1 to 3 and 6 to 8 versus Comparative example 1, Example 4 versus Comparative example 2, and Example 5 and Comparative example 3. The radiation rates of the thermal receivers of porous silicon carbide are in a range of 0.73 to 0.91 in the examples, which are larger than 0.75 in the comparative examples, the radiation rate of the thermal receivers of dense silicon carbide is 0.78 in the example, which is larger than 0.71 in the comparative example, and the radiation rate of the thermal receivers of porous silicon carbide loaded with silicon is 0.73 in the example, which is larger than 0.64 in the comparative example. As a result, it is found that the radiation rate is higher in the examples in which the surface treatment has been carried out than in the comparative examples in which the surface treatment has not been carried out on the thermal receiver. Therefore, in a case in which the receiver according to the examples of the invention is used as a heat collector of solar thermal power generation, it is possible to radiate the heat of the absorbed light and favorably transfer the heat to the heat medium.
In addition, in a case in which the receiver is used as a heat collector of solar thermal power generation, it is possible to transfer heat to the heat medium due to both the radiation rate and the thermal conductivity. That is, when the receiver is made of a material having a high thermal conductivity, heat is transferred from the receiver having an increased temperature to the heat medium passing through holes. In addition, when the radiation rate is high, it is also possible to favorably heat the heat medium using radiation from the receiver.
In addition, the reflectivity of the thermal receivers of porous silicon carbide are 9% to 21% in the examples, which are smaller than 25% in the comparative examples, the reflectivity of the thermal receivers of dense silicon carbide is 22% in the example, which is smaller than 36% in the comparative example, and the reflectivity of the thermal receivers of porous silicon carbide loaded with silicon is 27% in the example, which is smaller than 36% in the comparative example. As a result, it is found that, since, in the thermal receivers according to Examples 1 to 8, all the surfaces to which solar light is radiated have undergone the surface treatment, the reflectivity becomes lower than that in the comparative examples. Therefore, it is considered that, in a case in which the thermal receivers according to the examples of the invention are used as a heat collector for solar thermal power generation, it is possible to efficiently transfer heat from the surface to which solar light is radiated to the thermal receiver.

### (Fifth embodiment)

Hereinafter, a fifth embodiment, which is an embodiment of the solar thermal power generation device of the invention, will be described.
In the solar thermal power generation device according to the embodiment, the thermal receiver according to the first embodiment of the invention is used.

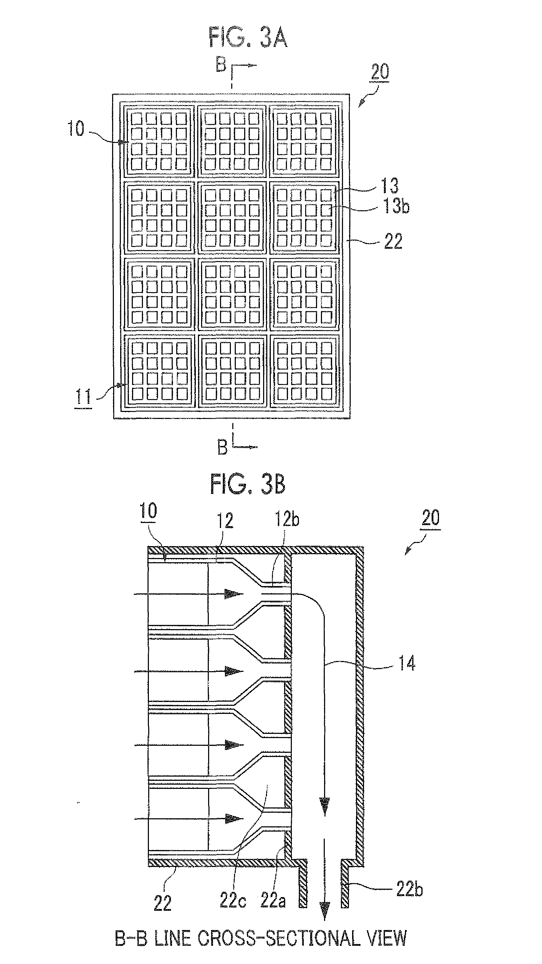

Fig. 3A is a front view schematically illustrating a receiver array that configures the solar thermal power generation device according to the fifth embodiment of the invention, and Fig. 3B is a cross-sectional view of the receiver array cut along the line B-B illustrated in Fig. 3A.

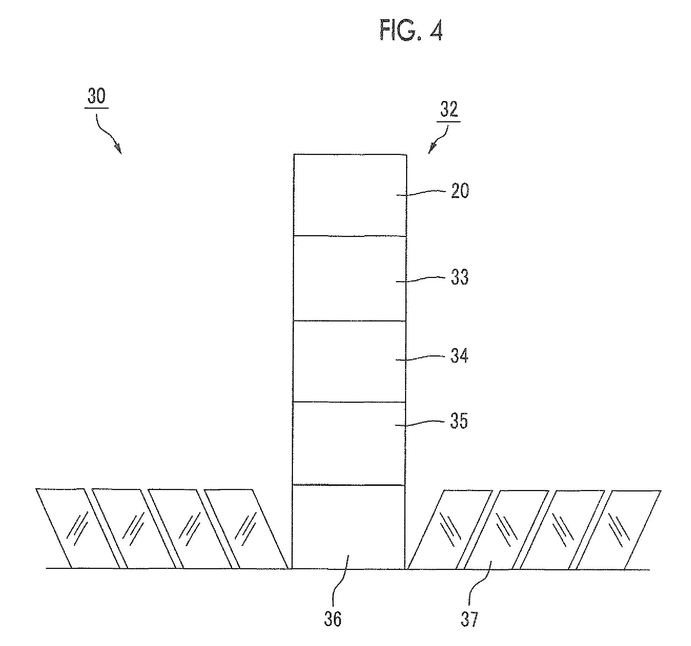

Fig. 4 is an explanatory view schematically illustrating the solar thermal power generation device according to the fifth embodiment of the invention.

In a receiver array 20 illustrated in Figs. 3A and 3B, multiple thermal receivers 10 are disposed in a box-like frame 22, in which a solar light irradiation surface is opened, in a state in which the surfaces of the heat absorption body 11 which receive the radiation of solar light are arrayed to face the front.

That is, a gas exit 12b in the support body 12 that configures the thermal receiver 10 is coupled with a bottom portion 22a of the frame 22, and the bottom portion 22a forms a closed space except a portion that is connected to a pipe 22b. Therefore, the heat medium 14, such as the air, passes through the flow paths 13b formed in the honeycomb unit 13, is heated using the heat absorption body 11, then collected in the bottom portion 22a of the frame 22 through the exit 12b in the support body 12, and led to a vapor generating device (boiler) 33, described below, through the pipe 22b.

In actual cases, the pipe 22b, a container coupled with the pipe 22b, or the like is coupled with an apparatus that suctions gas, such as an efflux pump. Therefore, when the efflux pump or the like is driven, the heat medium 14, such as the air, around the thermal receiver 10 passes through the flow paths 13b formed in the honeycomb unit 13, and heat stored in the heat absorption body 11 can be transferred to the heat medium 14, such as the air.

In the receiver array 20 illustrated in Figs. 3A and 3B, the air around the thermal receiver 10 is led to the flow paths 13b in the honeycomb unit 13, the solar thermal power generation device may have a double structure having two rooms as the bottom portion 22a of the frame 22. In this case, the heat medium 14, such as the air, all of sudden, does not flow into the flow paths 13b formed in the honeycomb unit 13, but flows into one of the two rooms, thereby flowing into spaces 22c present between the multiple thermal receivers 10. After that, the heat medium 14 is blown out from the void formed between the heat collecting portion 12a, and immediately flows into the flow paths 13b formed in the honeycomb unit 13 of the thermal receiver 10.

In a case in which the solar thermal power generation device has the above configuration, since the heat medium 14 exchanges heat with the support body 12 having an increased temperature for the first time, the thermal efficiency becomes larger.

As illustrated in Fig. 4, in the solar thermal power generation device 30 of the invention, the receiver array 20 is disposed at the height location of a central tower 32, and the vapor generation device 33, a heat storing device 34, a vapor turbine 35 and a cooling device 36 are sequentially disposed below the receiver array. In addition, multiple heliostats 37 are disposed around the central tower 32, the heliostats 37 are set so that the reflection angle or direction can be freely controlled, whereby the solar thermal power generation device is controlled so that momentarily changing solar light is reflected at the heliostats 37 and collected at the receiver array 20 in the central tower 32.

The vapor generating device 33 is a division that generates vapor for driving the vapor turbine 35. In the vapor generating device 33, the heat medium 14 heated using the heat absorption body 11 in the receiver array 20 passes through the pipe 22b, then, is led to the pipe in the vapor generating device 33 (boiler), and the heat exchange with the heat medium 14 occurs. Water heated through the heat exchange generates water vapor.

The generated water vapor is introduced into the vapor turbine 35, drives and rotates the vapor turbine 35, and a power generator (not shown) is driven through the rotation of the vapor turbine 35, thereby generating electricity.

The heat storing device 34 is a member that temporarily stores the heat obtained using the heat medium 14, and has a heat storing material having a large thermal capacity. Examples of the heat storing material that is used include solid mediums, such as fused salts, silica sand, ceramics, concrete and graphite.
In the heat storing device 34, a heat storing pipe (not shown) connected to the pipe 22b is made to pass, and the heat medium 14 heated using the heat absorption body 11 is made to pass through the heat storing pipe, thereby supplying heat to the heat storing material. Since the heat storing material has a large thermal capacity, the material can absorb and store a large amount of heat.

In the heat storing device 34, another vapor generating pipe (not shown), separately from the heat storing pipe, is made to pass, a non-heated heat medium is made to flow through the vapor generating pipe at times during which solar light cannot be used, such as at night, and the heat medium is heated using the heat storing material having an increased temperature.

The heated heat medium flows into the vapor generating device 33 so as to generate water vapor, and, as described above, electricity is generated through the driving of the vapor turbine 35.

The water vapor that has passed through the vapor turbine 35 is led to the cooling device 36, is cooled in the cooling device 36 so as to turn into water, undergoes a predetermined treatment, and then returns to the vapor generating device 33.
The cooling device 36 is preferably configured so that the heat medium 14, which has been made to pass through the vapor generating device 33 so as to be cooled, passes through a cooling pipe (not shown) in the cooling device 36. Since the heat medium 14 is made to pass through the cooling pipe so as to be heated, it is possible to efficiently use the heat absorbed at the thermal receiver 10. In addition, as described above, when the pipe is configured so that the heat medium 14 that has collected heat flows into spaces 22c formed between the multiple thermal receivers 10 in the receiver array 20, furthermore, it is also possible to effectively use the heat of the support body 12 in the Thermal receiver 10.
The solar thermal power generation device, in which the thermal receiver according to the first embodiment of the invention is used, has been described, but it is possible to obtain the same effects as when the thermal receiver according to the first embodiment is used even when the thermal receiver according to any of the second to fourth embodiments of the invention is used.

Hereinafter, the actions and effects of the solar thermal power generation device according to the fifth embodiment of the invention will be listed.
(11) In the solar thermal power generation device of the embodiment, since the thermal receiver according to the invention is used, it is possible to efficiently convert the radiated solar light into heat, and to efficiently carry out power generation.

(12) In the solar thermal power generation device of the embodiment, since the receiver array has multiple thermal receivers, in the solar thermal power generation device, it is possible to use a large amount of solar heat, and to carry out a large amount of power generation.

(13) In the solar thermal power generation device of the embodiment, since the heat storing device is used, and heat generated using solar light can be stored in the heat storing device, it is possible to carry out power generation even at night or rainy days, during which there is no solar light.

### (Other embodiments of the invention)

In the first embodiment of the invention, an example in which the honeycomb unit 13, which is the heat absorption body 11, is made of porous silicon carbide has been described, but it is also possible to use a different porous ceramic. Examples of the different porous ceramic include nitride ceramics, such as aluminum nitride, silicon nitride and boron nitride; carbide ceramics, such as zirconium carbide and tantalum carbide; oxide ceramics, such as alumina, zirconia, cordierite and mullite; and the like. The above ceramics have a high thermal conductivity, when used as the heat absorption body 11, it is possible to smoothly transfer the obtained heat to the heat medium.

In the first embodiment of the invention, the cross-sectional shape of the flow path 13b in the honeycomb unit 13 is rectangular, but the cross-sectional shape of the flow path 13b is not particularly limited, and may be hexagonal, octagonal, or the like.

In the first embodiment of the invention, the support body 12 has a rectangular shape as the shape seen from the front surface, but has a funnel shape as the overall shape, but the shape of the support body 12 is not limited thereto, and may be hexagonal, octagonal, or the like as the shape seen from the front surface.

In the first embodiment of the invention, an example in which multiple honeycomb units 13 coupled through the adhesive layer are used as the heat absorption body 11 has been described, but the heat absorption body 11 may be made up of one honeycomb unit.

In the first to fourth embodiments of the invention, the surface treatment is carried out only on the surface of the honeycomb unit 13 to which solar light is radiated, but the surface treatment may be carried out on the surface of the heat insulating material or the support body to which solar light is radiated.

In the first to third embodiments of the invention, the blasting process treatment has been described as an example of the surface treatment on the radiation surface of solar light; however, instead of the blasting process treatment, a cutting process treatment, an etching process treatment using a fused salt, and the like can be applied.

In the fourth embodiment of the invention, the coating layer is formed as the surface treatment of the thermal receiver, but a coarsened surface may be further formed on the coating layer through a polishing treatment. Even with the above configuration, it is possible to reduce the reflection of solar light.
Examples of the polishing treatment carried out on the coating layer include a blasting process treatment, a cutting process treatment, a polishing process treatment, an etching process treatment using a fused salt, and the like.

The solar thermal power generation system illustrated in Fig. 4 is an example of the solar thermal power generation system according to the fifth embodiment of the invention, and the member and the like that configure a power generation system are not limited to those illustrated in Fig. 4, and can be appropriately set as necessary. For example, in the power generation system illustrated in Fig. 4, a reheating device and the like may be provided. In addition, the number, disposition or the like of the pipes may also be appropriately changed.

### Reference Signs List

- 10: THERMAL RECEIVER
- 11: HEAT ABSORPTION BODY
- 12: SUPPORT BODY
- 12a: HEAT COLLECTING PORTION
- 12b: GAS EXIT
- 13: HONEYCOMB UNIT
- 13a: SURFACE
- 13b: FLOW PATH
- 14: HEAT MEDIUM
- 15: ADHESIVE LAYER
- 16: COATING LAYER
- 17: HEAT INSULATING MATERIAL
- 18: SOLAR LIGHT
- 20: RECEIVER ARRAY
- 22: FRAME
- 22a: BOTTOM PORTION
- 22b: PIPE
- 30: SOLAR THERMAL POWER GENERATION DEVICE
- 32: CENTRAL TOWER
- 33: VAPOR GENERATING DEVICE
- 34: HEAT STORING DEVICE
- 35: VAPOR TURBINE
- 36: COOLING DEVICE
- 37: HELIOSTAT

## Claims

1. A thermal receiver used in a solar thermal power generation device, comprising:
a heat absorption body made of one or multiple honeycomb units having multiple flow paths arranged for circulation of a heat medium; and
a support body which accommodates and supports the heat absorption body, and allows circulation of the heat medium,
wherein the heat absorption body is configured to include silicon carbide, and
a surface to which solar light is radiated has undergone any surface treatment of a polishing treatment or a coating treatment.

2. The thermal receiver according to Claim 1,
wherein the polishing treatment is a blasting process treatment, and a coarsened surface is formed on the surface to which solar light is radiated.

3. The thermal receiver according to Claim 2,
wherein a surface roughness Ra of the coarsened surface is 0.5 µm to 5.0 µm.

4. The thermal receiver according to Claim 1,
wherein a black coating layer is formed on the surface to which solar light is radiated through the coating treatment.

5. The thermal receiver according to Claim 4,
wherein the coating layer is made of an infrared black body coating composition including an infrared radiator mainly including an oxide of a transition element and an inorganic compound having a softening temperature of 400°C to 1000°C.

6. The thermal receiver according to Claim 5,
wherein the oxide of a transition element is at least one selected from manganese dioxide, manganese oxide iron oxide, cobalt oxide, copper oxide and chromium oxide, and
the inorganic compound is a high expansion glass with a low melting point, which is made of at least one selected from aluminosilicate glass, potassium lead glass, soda lead glass, soda zinc glass, soda barium glass, barium glass, boron glass, strontium glass, high lead glass and potassium soda lead glass.

7. The thermal receiver according to Claim 4,
wherein the coating layer is a porous carbon layer.

8. The thermal receiver according to any one of Claims 4 to 7,
wherein a thickness of the coating layer is 2 µm to 50 µm.

9. The thermal receiver according to any one of Claims 4 to 7,
wherein a coarsened surface is formed on a surface of the coating layer through the polishing treatment.

10. The thermal receiver according to Claim 9,
wherein the polishing treatment is a blasting process treatment.

11. The thermal receiver according to Claim 9 or 10, wherein a surface roughness Ra of the coarsened surface is 0.5 µm to 5.0 µm.

12. The thermal receiver according to any one of Claims 1 to 11,
wherein flow paths are formed in the honeycomb unit at 31.0 paths/cm² to 93.0 paths/cm², and a thickness of a wall portion between the flow paths is 0.1 mm to 0.5 mm.

13. The thermal receiver according to any one of Claims 1 to 12,
wherein the honeycomb unit is made of dense silicon carbide.

14. The thermal receiver according to any one of Claims 1 to 12,
wherein the honeycomb unit is made of porous silicon carbide.

15. The thermal receiver according to any one of Claims 1 to 12,
wherein the honeycomb unit is made of porous silicon carbide having pores loaded with silicon.

16. The thermal receiver according to Claims 14 or 15,
wherein a porosity of the honeycomb unit is 35% to 60%, and an average pore diameter is 5 µm to 30 µm.

17. The thermal receiver according to any one of Claims 1 to 16,
wherein a heat insulating material is interposed between the heat absorption body and the support body.

18. A solar thermal power generation device,
wherein the thermal receiver according to any one of Claims 1 to 17 is used.
